# EUROPEAN PATENT SPECIFICATION

(11) **EP 2 195 914 B1**
(45) Date of publication and mention of the grant of the patent: **04.05.2011**
(21) Application number: 08787195.0
(22) Date of filing: 13.08.2008
(51) Int. Cl.: H02M 3/156

(54) **A SELF-OSCILLATING CONVERTER**
SELBSTOSZILLIERENDER UMRICHTER
CONVERTISSEUR À AUTO-OSCILLATION

(30) Priority: 13.08.2007 DE 102007038181; 26.12.2007 US 16758 P
(43) Date of publication of application: 16.06.2010
(73) Proprietor: TEXAS INSTRUMENTS DEUTSCHLAND GMBH, 85356 Freising (DE)
(72) Inventor: GIBSON, Neil, 85354 Freising (DE); SCOONES, Kevin, Dallas,TX 75206 (US)
(74) Representative: Holt, Michael
(86) International application number: PCT/EP2008/060644
(87) International publication number: WO 2009/021975

(56) References cited:
- US-A1- 2006 220 627

## Description

The invention relates to a self-oscillating converter that includes a load capacitor with a negligibly small equivalent series resistor and a feedback loop with a comparator to which a voltage difference between a reference voltage and an output voltage of the converter is applied.

Self-oscillating converters typically depend upon the equivalent series resistance (ESR) of the output or load capacitor for their operation. Modern capacitors as for example small high-frequency ceramic thin film capacitors have a negligible ESR. Then, an external resistance is needed. But the external resistance leads to a higher output ripple wave form of the output voltage.

With no or too small an equivalent series resistance, the oscillator becomes instable or only conditionally stable with for example more than one stable oscillation frequencies.

Document US 20060220627 shows a self oscillating converter as defined in the preamble of claim 1.

The present invention provides a self oscillating converter according to claim 1.

The present invention provides a converter in a circuit design that compensates for a negligibly small equivalent series resistor of an output capacitor. Thus, modern capacitors may be used without compromising the stable oscillation of the converter. Specifically, the inventive converter comprises a first auxiliary feedback path from an output node to a first differential input of the comparator and a second auxiliary feedback path from the output node to a second differential input of the comparator. The first auxiliary feedback path has a first RC time constant and the second auxiliary feedback path has a second RC time constant different from the first time constant. The differential voltage between the first and second differential inputs is added to the voltage difference applied to the comparator. The two auxiliary feedback paths are preferably connected to a differential input pair of the comparator. An auxiliary ramp is generated with the differential time constant and is fed into the auxiliary pair of inputs of the summing comparator. This mechanism effectively adds a ramp to the usual feedback path of the converter. As the auxiliary ramp is differential, there is no series resistance added to the converter's output resistance. Or, in other words, there is no DC component. The invention allows the use of modern capacitors that have a negligibly small equivalent series resistor without compromising the stability of oscillation.

Further advantages will ensue from the following description with reference to the drawings in which
- Figure1 shows a schematic of an inventive boost converter; and
- Figure 2 shows a possible implementation of the summing comparator together with the additional feedback paths.

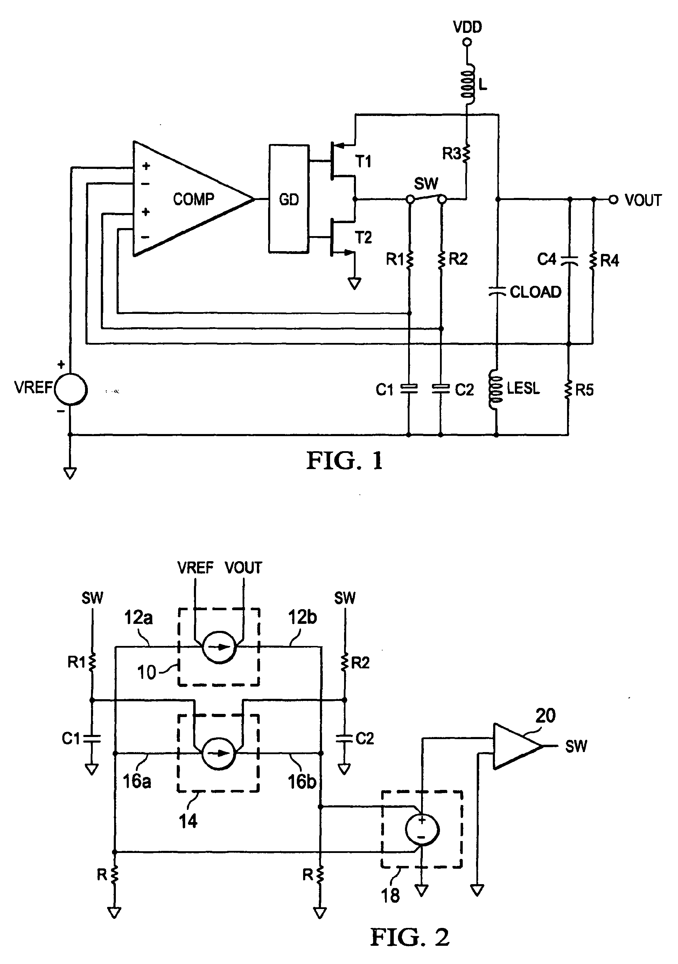

Figure 1 shows a schematic of an inventive boost converter with the elements necessary to understand the invention. COMP is a high gain summing comparator with two differential input pairs. The output of the comparator COMP is connected to a gate driver unit GD driving a pair of MOS transistors T1 and T2 interconnected at their drains. The source of one of the MOS transistors is connected to ground and the source of the other MOS transistor is connected to the output Vout. The interconnection point between the two transistors T1 and T2 is a node SW. Node SW is connected via a resistor R3 and an inductor L to a voltage supply VDD. The non-inverting input of the first differential input pair is connected to a reference voltage source Vref. The inverting input of the first differential input pair is connected via a resistor R4 and a parallel capacitor C4 to the output Vout and via a resistor R5 to ground. Resistors R4 and R5 together with C4 constitute a filter network of a main feedback path. Two RC series combinations are connected between node SW and ground. The first RC combination has resistor R1 and capacitor C1 which define a first time constant Tau1 equal to R1*C1. The second RC combination has resistor R2 and capacitor C2 which define a second time constant Tau2 equal to R2*C2. The interconnection nodes of the RC combinations are coupled to the second differential input pair of the comparator, thereby providing two auxiliary feedback paths. Each RC combination produces a ramp signal. Since the time constants Tau1 and Tau2 are different, a differential ramp signal is effectively applied to the second differential input pair of the comparator COMP. A capacitor Cload is connected between the output Vout and ground via an inductor Lesl which is the equivalent series inductor of the capacitor. The capacitor Cload is a capacitor with a negligibly small equivalent series resistance ESR.

In Figure 2 a first block 10 represents a differential amplifier with a first input connected to the reference voltage Vref and a second input connected to the output voltage Vout. Block 10 corresponds to the first differential input pair of the summing comparator COMP of Figure 1 and has differential outputs 12a, 12b. A block 14 represents a further differential amplifier with inputs connected to the nodes of the RC combinations R1/C1 and R2/C2 and differential outputs 16a, 16b. The inputs to block 14 correspond to the second differential input pair of the summing comparator COMP. Outputs 12a and 16a are interconnected, just as outputs 12b and 16b, and connected to ground via a resistor R. The voltage difference between the interconnected differential outputs is symbolized in Fig. 2 by a block 18 and is applied to the inputs of a comparator 20. The output of comparator 20 corresponds to node SW in Figure 1. At the first differential amplifier 10 a voltage difference between the reference voltage and the output voltage is amplified and fed to the comparator 20 as usual. With the two auxiliary feedback paths from the output of the comparator, i.e. the first auxiliary feedback path with R1 and C1 and the second auxiliary feedback path with R2 and C2, a voltage difference between the two voltage ramps of the auxiliary feedback paths is added to the voltage difference Vref - Vout. As the time constants Tau1 and Tau2 of the two feedback paths are different the difference voltage over time is also a voltage ramp. Since only the voltage difference between the two auxiliary feedback paths is used, no DC component is introduced.

The behavior of a self-oscillating converter using the inventive feedback paths is much the same as the behavior of a self-oscillating converter with a load capacitor that does have an equivalent series resistance. Especially oscillation is as stable as it is for a converter with ESR. Advantageously, the load capacitor is a ceramic thin film capacitor.

To change the converter between buck and boost mode it is only necessary to invert the inputs to block 14. In the preferred embodiment, a switch is provided to invert the inputs to block 14 in response to a digital control signal.

The inventive concept is advantageous for both hysteretic and non hysteretic converters.

## Claims

1. A self-oscillating converter including a load capacitor (C_{load)} with a negligibly small equivalent series resistor and a feedback loop with a comparator (COMP) having an output node (SW), to which a voltage difference between a (COMP) having an output node (SW), reference voltage (VREF) and an output voltage (VOUT) of the converter is applied, comprising:
a first auxiliary feedback path (R1C1) from output node to a first the differential input of the comparator; the first auxiliary feedback path having a first RC time constant, **characterised in that** the converter further comprises:
a second auxiliary feedback path (R2C2) from the output node to a second differential input of the comparator;
the second auxiliary feedback path having a second RC time constant different from the first time constant; and
means for adding the differential voltage between the first and second differential inputs to the voltage difference applied to the comparator.

2. The converter of claim 1, wherein the first and second auxiliary feedback paths each comprise a series resistor (R1R2) and a capacitor (R1C2) connected to ground.

3. The converter according to claim 1 or claim 2, wherein the comparator has two differential input pairs, a first pair being used with the feedback loop and a second pair with the first and second auxiliary feedback paths.

4. The converter according to any of the preceding claims and further comprising a switching unit which in response to a logic buck/boost control signal inverts the first and second differential inputs relative to the applied differential voltage.

5. The converter according to any of the preceding claims, wherein the load capacitor is a ceramic thin film capacitor.

## Patentansprüche

1. Selbstoszillierender Wandler, der einen Lastkondensator (Cload) mit einem vernachlässigbar geringen äquivalenten Reihenwiderstand und eine Rückkopplungsschleife mit einem Komparator (COMP) mit einem Ausgangsknoten (SW) enthält, an den eine Spannungsdifferenz zwischen einer Referenzspannung (Vref) und einer Ausgangsspannung (Vout) des Wandlers angelegt wird, umfassend:
einen ersten Hilfsrückkopplungspfad (R1/C1) von dem Ausgangsknoten zu einem ersten differenziellen Eingang des Komparators; wobei der erste Hilfsrückkopplungspfad eine erste RC-Zeitkonstante hat, **dadurch gekennzeichnet, dass** der Wandler ferner umfasst:
einen zweiten Hilfsrückkopplungspfad (R2/C2) von dem Ausgangsknoten zu einem zweiten differenziellen Eingang des Komparators;
wobei der zweite Hilfsrückkopplungspfad eine zweite RC-Zeitkonstante hat, die sich von der ersten Zeitkonstante unterscheidet; und
Mittel zur Addition der differenziellen Spannung zwischen dem ersten und dem zweiten differenziellen Eingang zu der an dem Komparator angelegten Spannungsdifferenz.

2. Wandler gemäß Anspruch 1, bei dem der erste und der zweite Hilfsrückkopplungspfad jeweils einen Reihenwiderstand (R1, R2) und einen mit Masse verbundenen Kondensator (C1, C2) umfassen.

3. Wandler gemäß Anspruch 1 oder Anspruch 2, bei dem der Komparator zwei differenzielle Eingangspaare hat, wobei ein erstes Paar mit der Rückkopplungsschleife verwendet wird und ein zweites Paar mit dem ersten und dem zweiten Hilfsrückkopplungspfad verwendet wird.

4. Wandler gemäß einem der vorhergehenden Ansprüche und ferner umfassend eine Schalteinheit, die als Reaktion auf ein logisches Abwärts/Aufwärtssteuersignal den ersten und den zweiten differenziellen Eingang bezogen auf die angelegte Differenzspannung invertiert.

5. Wandler gemäß einem der vorhergehenden Ansprüche, bei dem der Lastkondensator ein keramischer Dünnschichtkondensator ist.

## Revendications

1. Convertisseur auto-oscillant comprenant un condensateur de charge (CLOAD) qui présente une résistance série équivalente suffisamment petite pour pouvoir être négligée et une boucle de rétroaction avec un comparateur (COMP) qui présente un noeud de sortie (SW), auquel est appliquée une différence de tension entre une tension de référence (VREF) et une tension de sortie (VOUT) du convertisseur, comprenant :
un premier chemin de rétroaction auxiliaire (R1, C1) qui va du noeud de sortie à une première entrée différentielle du comparateur ;
le premier chemin de rétroaction auxiliaire présentant une première constante de temps RC, **caractérisé en ce que** le convertisseur comprend en outre :
un second chemin de rétroaction auxiliaire (R2, C2) qui va du noeud de sortie à une seconde entrée différentielle du comparateur ;
le second chemin de rétroaction auxiliaire présentant une seconde constante de temps RC différente de la première constante de temps ; et
des moyens destinés à ajouter la tension différentielle entre les première et seconde entrées différentielles à la différence de tension appliquée au comparateur.

2. Convertisseur selon la revendication 1, dans lequel les premier et second chemins de rétroaction auxiliaires comprennent chacun une résistance série (R1, R2) et un condensateur (C1, C2) connecté à la masse.

3. Convertisseur selon la revendication 1 ou la revendication 2, dans lequel le comparateur présente deux paires d'entrée différentielles, une première paire étant utilisée avec la boucle de rétroaction et une seconde paire étant utilisée avec les premier et second chemins de rétroaction auxiliaires.

4. Convertisseur selon l'une quelconque des revendications précédentes et comprenant en outre une unité de commutation qui, en réponse à un signal de commande logique d'abaissement / d'élévation, inverse les première et seconde entrées différentielles par rapport à la tension différentielle appliquée.

5. Convertisseur selon l'une quelconque des revendications précédentes, dans lequel le condensateur de charge est un condensateur à couches minces céramique.
